# EUROPÄISCHE PATENTSCHRIFT

(11) **EP 0 430 153 B1**
(45) Veröffentlichungstag und Bekanntmachung des Hinweises auf die Patenterteilung: **15.12.1993**
(21) Anmeldenummer: 90122612.6
(22) Anmeldetag: 27.11.1990
(51) Int. Cl.: F02B 37/12, F02D 19/06, F01N 3/22

(54) **Hubkolbenbrennkraftmaschine**
Reciprocating internal combustion engine
Moteur à combustion interne à piston alternatif

(30) Priorität: 01.12.1989 DE 3939729
(43) Veröffentlichungstag der Anmeldung: 05.06.1991
(73) Patentinhaber: Motoren-Werke Mannheim Aktiengesellschaft, D-68140 Mannheim (DE)
(72) Erfinder: Gerstner, Hans, W-6805 Heddesheim (DE)
(74) Vertreter: Nau, Walter, Dipl.-Ing.

(56) Entgegenhaltungen:
- FR-A- 1 330 022
- FR-A- 2 483 515
- US-A- 4 122 673
- US-A- 4 223 534
- US-A- 4 702 219

## Beschreibung

Die Erfindung betrifft eine mehrzylindrige, insbesondere stationäre Hubkolbenbrennkraftmaschine nach dem Oberbegriff des Patentanspruchs.

In der gattungsbildenden FR-A- 1330 022 ist eine Hubkolbenbrennkraftmaschine beschrieben, die in erster Linie als Stationärmotor eingesetzt wird. Derartige Motoren unterliegen im stationären Einsatz der Technischen Anleitung Luft mit ihren strengen Emissionsauflagen.

Aufgabe der Erfindung ist es daher, eine Hubkolbenbrennkraftmaschine nach dem Oberbegriff des Patentanspruchs zu schaffen, bei der in einfacher Weise eine Überschreitung der Schadstoffgrenzwerte der abgegebenen Abgase vermieden wird.

Die bei derartigen Motoren zur Einhaltung der TA-Luft notwendigen selektiv-katalytisch-reduzierenden [SCR]-Katalysatoren besitzen einen zulässigen Eingangstemperaturbereich, der beispielsweise von 380 bis 500°C reichen kann. Da die Abgastemperatur nach der Abgasturbine im Gasbetrieb bei Vollast im Bereich der oberen Grenze des für den Katalysator zulässigen Temperaturbereichs, in dem Schadstoffgrenzwerte in den abgegebenen Abgasen garantiert werden, liegt, kann nicht unbedingt das Arbeiten im zulässigen Eingangstemperaturbereich des Katalysators gewährleistet werden. Zwar läßt sich die Abgastemperatur durch einen Zwischenkühler zwischen Motor und Katalysator senken, Jedoch ist der damit verbundene Bau- und Regelaufwand relativ groß.

Im Dieselbetrieb wird keine Luft abgeblasen, da man hierbei ein höheres Verbrennungsluftverhältnis bzw. höheren Ladedruck benötigt, wobei die Grenze nach unten in erster Linie durch die Abgastrübung gegeben ist. Da im Dieselbetrieb im Vergleich zum Gasbetrieb die Abgastemperatur geringer ist, wird hierbei ein Arbeiten im zulässigen Eingangstemperaturbereich des Katalysators von vornherein sichergestellt.

Im Gegensatz zum Dieselbetrieb erzielt man im Gasbetrieb mit einem kleinen Verbrennungsluftverhältnis eine günstige Verbrennung des Gas-Luftgemisches, weshalb der Ladedruck im Gasbetrieb wegen des geringeren Luftbedarfs vermindert werden muß. Dies geschieht durch Abblasen der zuviel geförderten Luft über eine einstellbare Abblaseklappe, die im Dieselbetrieb geschlossen und im Gasbetrieb durch ein entsprechendes Stellglied, beispielsweise einen Pneumatikzylinder, geöffnet wird.

Dadurch, daß die beim Gasbetrieb abgeblasene Luft dem Abgasstrom hinter der Abgasturbine zugeleitet wird, statt sie in den Maschinenraum abzublasen, erfolgt eine Absenkung der Abgastemperatur hinter der Turbine. Die noramlerweise beim Gasbetrieb abgeblasene Luftmenge beträgt etwa 4,5 % der Gesamtluftmenge (bei Vollast), wobei die Temperatur der Luft bei etwa 40°C liegt. Bei einer Abgastemperatur von ca. 490° bis 500°C ergibt sich damit eine Temperaturabsenkung des Abgases um ca. 20°C, so daß die Einhaltung der Schadstoffgrenzwerte am Katalysatoraustritt garantiert werden kann. Die notwendigen Installationskosten sind minimal, zumal Schalldämpfer für die bisher in den Raum abgeblasene Luft entfallen und der Installationsaufwand äußerst gering ist.

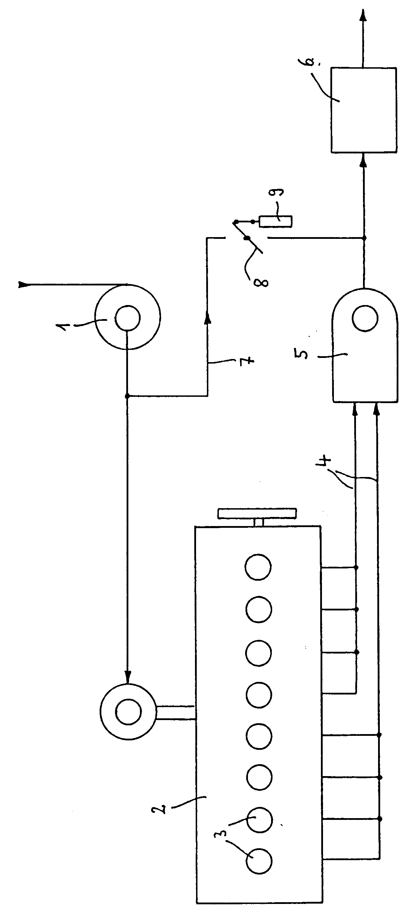

Selbst bei 25% Last wird die für den Katalysator minimal zulässige Abgastemperatur von ca. 380°C durch diese Maßnahme nicht unterschritten. Die Erfindung wird nachstehend im Zusammenhang mit einem in der beigefügten Abbildung schematisch dargestellten Ausführungsbeispiel näher erläutert.

Über ein Luftfilter angesaugte Ansaugluft wird einem Verdichter 1 zugeführt, von dem die Ladeluft dem Motor 2 zugeführt wird. Die Abgase von den einzelnen Zylindern 3 des Motors 2 werden über Abgasleitungen 4 einer Abgasturbine 5 zugeführt, die den Verdichter 1 antreibt. Die Abgasturbine 5 ist austrittsseitig mit einem Katalysator 6 verbunden, von dem die Abgase abgegeben werden.

Austrittsseitig bezüglich des Verdichters 1 zweigt eine Abführleitung 7 ab, die eine Absperrklappe 8 enthält und mit der Austrittsseite der Abgasturbine 5 verbunden ist. Die Absperrklappe 8 ist über einen pneumatischen Umschaltzylinder 9 zwischen einer geöffneten (Gasbetrieb) und einer geschlossenen (Dieselbetrieb) Stellung verstellbar. Hierdurch wird die beim Gasbetrieb überschüssige Ladeluft durch die beim Gasbetrieb geöffnete Absperrklappe 8 dem die Abgasturbine 5 verlassenden Abgas zugemischt, wodurch dessen Temperatur entsprechend gesenkt wird, so daß ein Arbeiten im zulässigen Eingangstemperaturbereich des Katalysators 6 sichergestellt wird.

## Patentansprüche

1. Im Diesel- und Gasbetrieb betreibbare, mehrzylindrige, vorzugsweise stationäre Hubkolbenbrennkraftmaschine mit einem von einer Abgasturbine (5) betriebenen Verdichter (1) für Ladeluft, und mit einer von der Austrittsseite des Verdichters (1) ausgehenden Abführleitung (7) die eine Absperrklappe (8) aufweist, *dadurch gekennzeichnet,* daß die Hubkolbenbrennkraftmaschine einen der Abgasturbine (5) nachgeschalteten Katalysator (6) aufweist, der als selektiv-katalytisch-reduzierender (SCR) Katalysator ausgebildet ist, daß die Abführleitung (7) für die Ladeluft dient und hinter der Abgasturbine (5) und vor dem Katalysator (6) in eine Verbindungsleitung zwischen der Abgasturbine (5) und dem Katalysator (6) mündet und daß die Absperrklappe (8) im Dieselbetrieb geschlossen und im Gasbetrieb geöffnet ist.

## Claims

1. A multi-cylinder, especially stationary, reciprocating-piston internal combustion engine capable of being diesel or gas operated, comprising a compressor (1) for charging air driven by an exhaust gas turbine (5), and a discharge line (7), incorporating a shut-off gate (8), provided on the exit side of the compressor (1), characterised in that the reciprocating-piston internal combustion engine has a catalytic converter (6) positioned downstream from the exhaust gas turbine (5) which takes the form of a selective catalytic reduction (SCR) catalytic converter; that the discharge line (7) conveys the charging air and discharges it beyond the exhaust gas turbine (5) and in front of the catalytic converter (6) into a connecting line between the exhaust gas turbine (5) and the catalytic converter (6); and that the shut-off gate (8) is closed during diesel operation and open during gas operation.

## Revendications

1. Moteur à combustion interne à pistons alternatifs à plusieurs cylindres pouvant fonctionner en diesel et au gaz, moteur de préférence stationnaire avec un compresseur (1) entraîné par une turbine à gaz d'échappement (5) pour l'air de combustion et avec une conduite d'évacuation (7) sortant par le côté sortie du compresseur (1), qui présente un clapet d'arrêt (8), moteur caractérisé en ce que le moteur à combustion interne à pistons alternatifs présente un catalyseur (6) monté en aval de la turbine à gaz (5), qui est constitué comme un catalyseur SCR (réducteur catalytiquement sélectif) en ce que la conduite d'évacuation (7) sert pour l'air de combustion et débouche derrière la turbine à gaz (5) et avant le catalyseur (6) dans une conduite de liaison entre la turbine à gaz (5) et le catalyseur (6) et en ce que le clapet d'arrêt (8) est fermé en fonctionnement diesel et est ouvert en fonctionnement au gaz.
